(19) Europäisches Patentamt
European Patent Office
Office européen des brevets

(11) **EP 4 398 357 A1**

(12) **EUROPEAN PATENT APPLICATION**

(43) Date of publication:
**10.07.2024 Bulletin 2024/28**

(21) Application number: **23220524.5**

(22) Date of filing: **28.12.2023**

(51) International Patent Classification (IPC):
**H01M 10/04** (2006.01)    **H01M 10/0583** (2010.01)
**B65H 45/101** (2006.01)

(52) Cooperative Patent Classification (CPC):
**H01M 10/0459; H01M 10/0583; B65H 45/101**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.01.2023 KR 20230000716**
**28.04.2023 KR 20230056378**

(71) Applicant: **LG Energy Solution, Ltd.**
**Seoul 07335 (KR)**

(72) Inventors:
• **KIM, Jong Seok**
  **34122 Daejeon (KR)**
• **KIM, Nam Young**
  **34122 Daejeon (KR)**
• **KIM, Yong Nam**
  **34122 Daejeon (KR)**
• **YOON, Se Hyun**
  **34122 Daejeon (KR)**
• **LEE, Ju Young**
  **34122 Daejeon (KR)**
• **CHOI, Jongkwan**
  **34122 Daejeon (KR)**

(74) Representative: **BCKIP Part mbB**
**Siegfriedstraße 8**
**80803 München (DE)**

(54) **ELECTRODE ASSEMBLY, METHOD FOR MANUFACTURING THE SAME, AND MANUFACTURING APPARATUS THEREFOR**

(57) The present invention relates to an electrode assembly, a method for manufacturing the same, and a manufacturing apparatus therefor.

[Figure 6]

<INDUCTION HEATING STEP>   <STANDBY STEP>   <ELECTRODE TAB HEATING STEP>   <HEATING AND PRESSING STEP>

EP 4 398 357 A1

**Description**

## CROSS-REFERENCE TO RELATED APPLICATIONS

This application claims the benefit of priority to Korean Patent Application No. 10-2023-0000716 filed at the Korean Intellectual Property Office on January 3, 2023 and 10-2023-0056378 filed on April 28, 2023.

## TECHNICAL FIELD

The present invention relates to an electrode assembly, a method for manufacturing the electrode assembly, and an apparatus for manufacturing the electrode assembly.

## BACKGROUND ART

Unlike a primary battery, a secondary battery can be recharged and may be formed in a small size or for a large capacity. Accordingly, a lot of research and development on secondary batteries are currently in progress. Along with the technology development and the increase in demand for mobile devices, the demand for secondary batteries as an energy source is sharply increasing.

Secondary batteries are classified into coin type batteries, cylindrical type batteries, prismatic type batteries, and pouch type batteries according to a shape of a battery case. In a secondary battery, an electrode assembly mounted inside a battery case is a chargeable and dischargeable power generating device having a structure in which an electrode and a separator are stacked.

The electrode assembly may be approximately classified into a jelly-roll type electrode assembly in which a separator is interposed between a positive electrode and a negative electrode, each of which is provided in the form of a sheet coated with an active material, and then, the positive electrode, the separator, and the negative electrode are wound, a stack-type electrode assembly in which a plurality of positive and negative electrodes with a separator therebetween are sequentially stacked, and a stack and folding-type electrode assembly in which stack-type unit cells are wound with a separation film having a long length.

Here, in the stack and folding-type electrode assembly, the separator is folded and stacked in a zigzag form, and the positive electrode or the negative electrode is inserted between folds of the separator. As a result, an electrode assembly in which the positive electrode, the separator, and the negative electrode are stacked is manufactured.

In this process, in order to bond the electrodes and the separator to each other, heat and pressure are applied to the stack in which the positive electrode, the separator, and the negative electrode are stacked.

However, it takes a long time and a lot of energy to bond the electrodes (positive electrode, negative electrode) and the separator in the stack by applying heat and pressure to the stack.

In addition, when applying heat and pressure to the stack, there is a problem in that heat and pressure cannot be uniformly applied regardless of the stacked positions of the electrodes and separator due to difference in stacked positions (stacked heights) of the electrodes and separator in the stack. That is, there occurs a problem in that adhesive force between the separator and the electrodes is not constant.

As a result, there is a problem that performance of the electrode assembly is not uniform.

Citation List

Patent Literature

Korean Patent Application Publication No. 10-2013-0132230

## SUMMARY OF THE INVENTION

The present invention has been made in an effort to provide an electrode assembly, a method for manufacturing the same, and a manufacturing apparatus therefor for addressing problems caused by non-constant adhesive force.

The afore-mentioned objects of the present invention are achieved by the features defined in independent claims. Further preferred features are set forth in dependent claims.

An exemplary embodiment of the present invention provides a method for manufacturing an electrode assembly including first electrodes, a separator, and second electrodes. The method may include: a) stacking a stack including the first electrodes, the separator, and the second electrodes on a stack table; b) performing induction heating by inductively heating the stack; and c) heating and pressing the inductively heated stack by a heating and pressing unit. At least one of the first electrodes may include a first electrode tab, and at least one of the second electrodes may include a second electrode tab. The method may further comprise: d) performing electrode tab heating by heating at least one of the first electrode tab and the second electrode tab.

Step d) may be performed after performing step b).

Step d) may be performed by using an induction heating coil.

In step d) the induction heating coil may be in contact with the at least one of the first electrode tab and the second electrode tab.

In step d) the induction heating coil may be spaced from the at least one of the first electrode tab and the second electrode tab by a predetermined distance, preferably of 15 mm or less.

Step d) may be performed for 1 second to 60 seconds.

In step b) the induction heating may be performed by gripping the stack by a gripper having an induction heating coil and inductively heating while conveying the stack between the stack table and the heating and pressing unit.

In step b) the induction heating may be performed by conveying the stack from the stack table to an induction heating unit including an induction heating coil prior to performing step c) and inductively heating the stack in the induction heating unit.

The conveying of the stack from the stack table to an induction heating unit is performed by a gripper, and wherein step is performed while the gripper maintains gripping the stack.

The method may further comprise, between step b) and step c): e) allowing heat distribution throughout the stack by having the stack stand by in an atmospheric state for a preset period of time.

Step e) may be performed for 3 seconds or longer and 60 seconds or shorter, prior to performing step d).

Another exemplary embodiment of the present invention provides an electrode assembly manufacturing apparatus for manufacturing an electrode assembly including first electrodes, a separator, and second electrodes. The apparatus may include: a stack table configured to allow the first electrodes, the separator, and the second electrodes to be stacked thereon to form a stack; and a heating and pressing unit configured to heat and press the stack. At least one of the first electrodes may include a first electrode tab, and at least one of the second electrodes may include a second electrode tab. The electrode assembly manufacturing apparatus may further comprise: an induction heating unit configured to inductively heat the stack, and an electrode tab heating unit configured to heat at least one of the first electrode tab and the second electrode tab.

The induction heating unit may be a gripper having an induction heating coil, configured to grip the stack and convey to the heating and pressing unit.

The induction heating unit may comprise: a first induction heating device including an induction heating coil; and a first device moving unit configured to move the first induction heating device to a surface of the stack.

The electrode assembly manufacturing apparatus may further comprise a gripper for conveying the stack between the stack table and the induction heating unit. The induction heating unit may be configured to heat the stack while the gripper maintains gripping the stack.

The electrode assembly manufacturing apparatus may further comprise a first control unit configured to: measure a temperature distribution on a surface of the stack during induction heating; adjust an induction heating temperature according to the measured temperature distribution; and determine whether to stop induction heating based on the induction heating temperature and an induction heating time.

The electrode tab heating unit may comprise: a second induction heating device including an induction heating coil, and a second device moving unit configured to move the second induction heating device to the first electrode tab or the second electrode tab.

The induction heating coil of the second induction heating device is configured to be in contact with the at least one of the first electrode tab and the second electrode tab during the induction heating.

The induction heating coil of the second induction heating device is configured to be spaced from the at least one of the first electrode tab and the second electrode tab by a predetermined distance, preferably of 15 mm or less, during the induction heating.

Still another exemplary embodiment of the present invention provides an electrode assembly subjected to compression, the electrode assembly including a first electrode, a separator, and a second electrode. The separator may be folded multiple times in a zigzag form, the first and the second electrode being alternately stacked with the separator interposed therebetween. A compression rate of a part of the separator positioned at the outermost of the electrode assembly may be greater than a compression rate of the other part of the separator. A difference in compression rate may be 3%p or less.

The electrode assembly may have a length of 400 mm to 600 mm and a width of 50 mm to 150 mm.

The separator (14) may have an air permeability of 80 sec/100 ml to 120 sec/100 ml at the center of the electrode assembly.

The electrode assembly manufacturing method and the electrode assembly manufacturing apparatus according to the exemplary embodiments of the present invention can shorten the time required to manufacture the electrode assembly.

Since the electrode assembly manufacturing method and the electrode assembly manufacturing apparatus according to the exemplary embodiments of the present invention can easily adjust a temperature of the electrode to a specific temperature range to reduce a temperature deviation between the electrodes, it is possible to provide an electrode assembly with uniform performance.

The electrode assembly according to the exemplary embodiment of the present invention has a separator showing a small deviation of air permeability between different positions within the electrode assembly, and therefore, has an advantage of uniform performance.

## BRIEF DESCRIPTION OF THE DRAWINGS

FIG. 1 is a plan view illustratively showing an electrode assembly manufacturing apparatus according to an exemplary embodiment of the present invention.

FIG. 2 is a front view showing a concept of the electrode assembly manufacturing apparatus according to the exemplary embodiment of the present invention.

FIG. 3 is a cross-sectional view illustratively showing a general electrode assembly.

FIGS. 4 to 6 are views illustratively showing a process of applying an electrode assembly manufacturing method or a manufacturing apparatus according to an exemplary embodiment of the present invention.

FIG. 7 is a view illustratively showing an induction heating unit according to an exemplary embodiment of the present invention.

FIG. 8(a) is a perspective view showing a first heating and pressing unit according to an exemplary embodiment of the present invention, and FIG. 8(b) is a perspective view showing a second heating and pressing unit according to an exemplary embodiment of the present invention.

FIG. 9 is a diagram showing a result of measurement of a surface temperature change of a stack during a process of manufacturing an electrode assembly according to an exemplary embodiment of the present invention.

FIG. 10 is a diagram showing an adhesive force pattern of an electrode assembly according to an exemplary embodiment of the present invention.

## DETAILED DESCRIPTION

Hereinafter, exemplary embodiments of the present invention will be described in detail such that one skilled in the art to which the present invention belongs can readily implement the same. However, the present invention may be embodied in various different forms, and is not limited to the configurations described herein.

When one part "includes", "comprises" or "has" one constituent element in the present specification, unless otherwise specifically described, this does not mean that another constitutional element is excluded, but means that another constitutional element may be further included.

In an exemplary embodiment of the present invention, the electrode assembly may be stacked in such a form that the first electrode and the second electrode are alternately arranged between folds of a folded separator. In other words, a portion of the separator is interposed in-between the alternately stacked first and second electrodes.

In the present invention, the stacking form in which the first electrode and the second electrode are alternately arranged between folds of the folded separator is referred to as zigzag stacking.

More specifically describing, the folded separator may mean a separator that is stacked on top of itself in an overlapping manner by being folded multiple times in a zigzag form. More specifically, the separator may have a stacking axis along which the stacking advances while portions thereof being stacked one on top of the other, having the separator folded in a zigzag form alternately from the left side of the stacking axis to the right side of the stacking axis, and vice versa. Further, according to the stacking, the first electrode and the second electrode may be alternately arranged between folds of the stacked separator. Here, the stacking axis refers to a virtual axis, in which direction the first electrode, the separator, and the second electrode are stacked. The stacking axis may pass through a center of the stack including the electrodes and the separator.

That is, the configuration that the first electrode and the second electrode are alternately arranged between folds of the separator means that separator portions are stacked one on top of the other in a direction of the stacking axis while the separator being folded in a zigzag form. Herein, the first electrode and the second electrode may be alternately inserted one by one in respective spaces created by the folded separator (i.e., between the separator portions stacked on each other).

**<Method for Manufacturing Electrode Assembly>**

An exemplary embodiment of the present invention provides a method for manufacturing an electrode assembly including a first electrode, a separator, and a second electrode.

The method for manufacturing an electrode assembly according to the present invention includes a step of inductively heating the stack between a stacking process that is a step of manufacturing the stack and a heating and pressing step that is a step of heating and pressing the stack. In addition, the method may further include a step of heating an electrode tab portion of the inductively heated stack. The electrode tab heating may be preferably performed by using an induction heating.

The heating and pressing step involves a lower plate that is configured for placing thereon an electrode assembly to be heated and pressed and for applying heat, and an upper plate which is configured to correspond to the lower plate and to apply heat. The upper plate corresponds to the lower plate in the sense that it is disposed opposite to the lower plate such that the electrode assembly can be interposed therebetween. The lower plate and the upper plate may be pressing blocks configured as a pair.

In the heating and pressing step of heating and pressing the electrode assembly, electrodes located at the outermost of the stack (uppermost and lowermost of the stack) are to be in direct physical contact with the lower plate and the upper plate, and therefore, can be applied with more heat and pressure than an electrode positioned at the center of the stack. This is because in the heating and pressing step, heating is performed while performing pressing in the state the uppermost and the lowermost of the stack are physically contacted respectively with the upper and the lower plate.

That is, in the heating and pressing step, the electrodes in the stack can be heated to different temperatures depending on their positions, so that the electrodes and the separator have different adhesive forces depending on their positions. As a result, there may occur a problem in that the performance of the electrode assembly becomes non-uniform depending on positions within the electrode assembly.

Accordingly, in the method for manufacturing an electrode assembly according to the present invention, more heat is applied to a local region, particularly to a central portion in the stack through the induction heating step. The heat applied to the local region diffuses throughout the electrode assembly. By heating and pressing the electrode assembly in the subsequent heating and pressing step, the electrode assembly can be uniformly heated as a whole.

In this process, since the electrode tab included in the stack is thinner than the other parts of the electrode assembly, including the electrode and the separator, a temperature of the electrode tab decreases faster than other parts after the induction heating step. As a result, even if the induction heating step and the heating and pressing step are performed, a problem may occur that the vicinity of the electrode tab is non-uniformly heated. The present invention further performs a step of heating the electrode tab between the induction heating step and the heating and pressing step, so that the electrode assembly can be more uniformly heated as a whole when it is subjected to the heating and pressing step. Preferably, the electrode tab heating can be performed by inductively heating the electrode tab.

Through this, the air permeability deviation of the separator inside the electrode assembly manufactured through the heating and pressing step is reduced and the adhesive force deviation between the electrode and the separator is reduced, so that an electrode assembly with uniform performance can be manufactured.

In an exemplary embodiment of the present invention, the stacking step may include supplying the first electrode to a stack table; supplying the second electrode to the stack table; and supplying the separator to the stack table.

In the present disclosure, "induction heating" refers to heating a target object by using an electromagnetic induction. In this way, Joule heat is generated in the target object by the induced current generated in the target object by the electromagnetic induction. Therefore, the induction heating is a heating method capable of locally heating even a target object at a certain distance from a heating device, as compared with a direct heating method of heating a target object in direct contact with the target object.

A coil may be used to perform the induction heating, which may be defined as an "induction heating coil". The induction heating method has an advantage in that it is easy to control heat and time applied to a heating target. In addition, the induction heating method is capable of non-contact heating, and therefore, may not damage the heating target.

In the present disclosure, "induction heating step" may mean locally heating the stack by using an electromagnetic induction heating. The locally heated stack may have electrodes arranged in the central portion of the stack. When the direct heating method is used, the uppermost or lowermost electrode of the electrode assembly may be heated more than the central electrode of the electrode assembly. However, in the method for manufacturing an electrode assembly according to an exemplary embodiment of the present invention, the central portion of the electrode assembly is first selectively heated through an induction heating method, and then the electrode assembly is heated by a direct heating method in a subsequent heating and pressing step, so that the electrode assembly can be uniformly heated in the end.

In the present invention, the "electrode tab heating step" may use an electromagnetic induction heating, like the induction heating step, and can be distinguished from the induction heating step in that a heating target is the electrode tab included in the electrode of the stack. That is, the target to be locally heated may be electrode tabs. Since the electrode tab is relatively very thin, as compared with the electrode and the separator, the temperature on the surface of the electrode tab may decrease faster after finishing the induction heating step. For this reason, the temperature of the electrode tab may become relatively non-uniform compared with other parts, when entering the heating and pressing step. However, in the method for manufacturing an electrode assembly according to an exemplary embodiment of the present invention, the electrode tab that has been relatively lowered in temperature is additionally heated through an electrode tab heating method before proceeding with the heating and pressing step, so that the electrode assembly can be uniformly heated in the subsequent heating and pressing step.

In an exemplary embodiment of the present invention, in the electrode tab heating step, at least one of the first electrode tab and the second electrode tab may be heated using an induction heating coil.

In an exemplary embodiment of the present invention, the induction heating coil may be in contact with or spaced from at least one of the first electrode tab and the second electrode tab by a predetermined distance. When the induction heating coil is in contact with the electrode tab (a distance between the electrode tab and the induction heating coil is 0 mm), the induction heating coil can transfer heat as much as possible, and therefore, it is possible to increase the temperature of the electrode tab even if induction heating is performed for a short time.

In addition, when the induction heating coil is spaced from the electrode tab by a predetermined distance, it is possible to increase the temperature of the electrode tab without damaging the electrode tab by heat generated from the induction heating coil.

In an exemplary embodiment of the present invention, the predetermined distance may be 15 mm or less. More specifically, in an exemplary embodiment of the present invention, the predetermined distance may be greater than 0 mm and equal to or less than 15 mm, preferably equal to or greater than 0.05 mm and equal to or less than 10 mm, and more preferably equal to or greater than 0.3 mm and equal to or less than 5 mm. When the above distance is satisfied, it is possible to inductively heat the electrode tab without damaging the electrode tab, as described above.

In an exemplary embodiment of the present invention, the electrode tab heating step, preferably using an induction heating, may be performed for 1 second to 60 seconds, preferably 5 seconds to 40 seconds, and more preferably 10 seconds to 30 seconds. However, the electrode tab heating time may be selected in consideration of a heating temperature in the heating step, a degree to which the electrode assembly is to be non-uniformly heated in the heating and pressing step, and the like.

In an exemplary embodiment of the present invention, in the electrode tab heating step, the electrode tab may be heated at a temperature of 40°C or higher and 90°C or lower, and preferably 50°C or higher and 80°C or lower. When the electrode tab is heated within the temperature range described above, the electrode tab can be heated without being damaged.

In an exemplary embodiment of the present invention, in the induction heating step, a portion of the stack is inductively heated, and the heat diffuses to the entire stack to heat the entire stack.

In an exemplary embodiment of the present invention, in the induction heating step, the first electrode or the second electrode of the stack may be inductively heated. More specifically, in an exemplary embodiment of the present invention, in the induction heating step, the first electrode or second electrode arranged in the center of the stack may be inductively heated. In the heating and pressing step, a relatively small amount of heat may be applied to the first electrode or second electrode arranged in the center of the stack, as compared with the first electrode or second electrode arranged at the outermost of the stack. However, since heat may be first applied to the first electrode or second electrode arranged at the center of the stack through the induction heating step, the heating and pressing step, when subsequently performed, can result in uniform heat distribution throughout the stack.

In the present invention, the induction heating may include induction heating for the entire surface of the stack, in addition to induction heating for only a partial region (local region) of the surface of the stack. However, even when only a partial region is inductively heated, the object of the present invention can be achieved. In addition, the induction heating can be distinguished from the heating and pressing in that no pressure is applied to the stack.

In an exemplary embodiment of the present invention, the induction heating step may be performed for 1 second to 60 seconds, preferably 5 seconds to 40 seconds, and more preferably 10 seconds to 30 seconds. The induction heating time may be selected in consideration of a degree to which the electrode assembly is to be non-uniformly heated in the heating and pressing step.

In an exemplary embodiment of the present invention, the induction heating step may inductively heat the stack using an induction heating coil.

The method for manufacturing an electrode assembly according to an exemplary embodiment of the present invention may include a step of conveying the stack to the heating and pressing step after the stacking step. In the conveying step, the stack may be gripped with a gripper in order to convey the stack.

The gripper may maintain the gripping of the stack in the heating and pressing step.

The method for manufacturing an electrode assembly according to an exemplary embodiment of the present invention may inductively heat the stack while conveying the stack from the stack table to the heating and pressing unit.

More specifically, in an exemplary embodiment of the present invention, the induction heating step may further include gripping the stack with a gripper including an induction heating coil and conveying the stack between the stacking step and the heating and pressing step. The induction heating step may be performed with the gripper during the conveying step.

More specifically, in an exemplary embodiment of the present invention, the induction heating step may include gripping the stack with a gripper including an induction heating coil; conveying the gripped stack to the heating and pressing step; and inductively heating the stack with the induction heating coil of the gripper while conveying the stack.

That is, since the induction heating coil is built in or attached to the gripper, there is no need to provide a separate space for induction heating, making an electrode assembly manufacturing apparatus compact.

Meanwhile, in an exemplary embodiment of the present invention, the induction heating step may further include conveying the stack to an induction heating unit including an induction heating coil between the stacking step and the heating and pressing step, and the induction heating step may be performed by the induction heating unit. As long as the induction heating unit can perform induction heating, a method commonly used in the related field may be used. Preferably, the induction heating step may be performed while the stack is being maintained in the state gripped by the gripper. In this way, once the stack prepared in the stacking step has been gripped by the gripper, it can be subject to the induction heating step and then be transferred to the heating and pressing step without an unnecessary pause. In other words, repetitive gripping and releasing of the stack in-between neighboring steps can be avoided.

More specifically, in an exemplary embodiment of the present invention, the induction heating step may include gripping the stack with a gripper and conveying the gripped stack to an induction heating unit including an induction heating coil; and inductively heating the stack in the induction heating unit.

That is, the gripper may not be equipped with an induction heating coil, but an induction heating unit separate from the gripper may include the induction heating coil. When a separate induction heating unit is used, the induction heating step can be performed on a stack having a higher thickness.

In addition, when the separate induction heating unit is used as in the present invention, an electrode tab portion protruding from the electrode may be additionally heated by the induction heating unit, and therefore, a temperature difference between the electrode tab and the electrode can be reduced.

In an exemplary embodiment of the present invention, in the induction heating step, the stack may be heated at a temperature of 40°C or higher and 90°C or lower, preferably 50°C or higher and 80°C or lower. When the stack is inductively heated within the temperature range described above, the stack can be heated without damaging the electrodes and the separator inside the stack.

In an exemplary embodiment of the present invention, the induction heating coil may be in contact with the stack or spaced from the stack by a predetermined distance.

When the induction heating coil is in contact with the stack (a distance between the stack and the induction heating coil is 0 mm), the induction heating coil can transfer heat as much as possible, and therefore, it is possible to increase the internal temperature of the stack even if induction heating is performed for a short time.

In addition, when the induction heating coil is spaced from the stack by a predetermined distance, it is possible to increase the internal temperature of the stack without damaging the stack by heat generated from the induction heating coil.

In an exemplary embodiment of the present invention, the predetermined distance may be 15 mm or less. More specifically, in an exemplary embodiment of the present invention, the predetermined distance may be greater than 0 mm and equal to or less than 15 mm, preferably equal to or greater than 0.05 mm and equal to or less than 10 mm, and more preferably equal to or greater than 0.3 mm and equal to or less than 5 mm. When the above distance is satisfied, it is possible to inductively heat the electrode without damaging the stack, as described above.

The method for manufacturing an electrode assembly according to an exemplary embodiment of the present invention may further include a step of removing the induction heating unit from a moving line of the electrode assembly before the heating and pressing step. Through this, physical collision between the induction heating unit and the heating and pressing unit can be prevented.

In addition, physical collision between the gripper and the heating and pressing unit can be also prevented by implementing a first heating and pressing step and a second heating and pressing step, to be described below.

The method for manufacturing an electrode assembly according to an exemplary embodiment of the present invention may further include a standby step of allowing the stack to stand by in an atmospheric state for a certain period of time between the induction heating step and the heating and pressing step. After the induction heating step, the heated stack may be left in an atmospheric state for a certain predetermined period of time so that the heat applied to the stack by the induction heating diffuses throughout the stack.

Through the standby step, heat transferred to a partial region of the stack may be transferred to the entire region of the stack. In this way, by intentionally stopping the induction heating for the stack for a certain period of time before proceeding with the heating and pressing step, the heat transferred to the stack by the induction heating diffuses uniformly throughout the stack.

Thereafter, by heating and pressing the stack in the subsequent heating and pressing step, uniformity in thickness of the electrode can be increased throughout the electrode assembly.

In an exemplary embodiment of the present invention, the standby step may be performed for 3 seconds or longer and 60 seconds or shorter, preferably 5 seconds or longer and 45 seconds or shorter, and more preferably 10 seconds or longer and 40 seconds or shorter.

When the time range described above is satisfied, it is possible to secure a time for which heat transferred to a partial region of the electrode inside the stack by the induction heating can distribute evenly throughout the stack. That is, if the standby step is performed for less than 3 seconds, the heat transferred to a partial region of the stack is difficult to transfer throughout the electrode. On the other hand, if the standby step is performed for longer than 60 seconds, the temperature of the electrode raised by the transferred heat may be decreased, and therefore, there may be a problem in that the effect of induction heating is reduced.

The standby time may be changed according to the heating time and heating temperature range of the stack in the subsequent heating and pressing step.

In an exemplary embodiment of the present invention, for the step of manufacturing a stack in which the first electrode and the second electrode are alternately arranged between folds of the folded separator, a technology that is commonly used in the related field may be used. For example, processes of stacking a first electrode on the stack table, covering the first electrode with a separator, stacking a second electrode on an upper surface of the separator, folding the separator to cover the second electrode and then again stacking a first electrode on the upper surface of the separator may be repeated. This is referred to as a zigzag stacking method in the present disclosure. In this case, in performing the process of moving the separator while having it cover the first electrode or the second electrode, various methods may be applied, including a method in which the stack table moves left and right, a method in which the separator moves left and right, a method in which the stack table rotates, and the like.

In the zigzag stacking method, a holding mechanism may grip the stack to maintain alignment of the stack during the process of stacking the first electrode, the second electrode, and the separator.

In the present disclosure, the "holding mechanism" is a tool for gripping a stack placed on a stack table in order to stack the first electrode or the second electrode in the zigzag stacking method, which is different from the gripper for gripping the stack in the heating and pressing step.

In an exemplary embodiment of the present invention, the separator may be supplied in a form of a separator sheet. That is, the separator may be supplied in a continuous form. In addition, the "upper surface" of the electrode/separator may refer to a surface that is opposite to a surface which faces the stack table.

The method for manufacturing an electrode assembly according to an exemplary embodiment of the present invention may include a heating and pressing step of heating and pressing the stack inductively heated as described above. In the heating and pressing step, the stack may be heated while being pressed in a direction of the stacking axis. In addition, the heating and pressing step may be performed by a heating and pressing unit, as described below.

Further, in an exemplary embodiment of the present invention, the heating and pressing step may include moving the stack between a pair of pressing blocks including press heaters; surface-pressing the stack by moving the pair of pressing blocks in the direction of the stacking axis; and heating the stack.

The pair of pressing blocks may include a lower plate and an upper plate facing the lower plate.

Further, in an exemplary embodiment of the present invention, the heating and pressing step may include moving the stack between a pair of pressing blocks; surface-pressing the stack by moving the pair of pressing blocks in the direction of the stacking axis; and heating the stack by a separately provided press heater.

That is, the press heater may be included in the pressing block or may be provided as a separate configuration.

The method for manufacturing an electrode assembly according to an exemplary embodiment of the present invention may further include a step of releasing gripping of the gripper before the heating and pressing step.

That is, the step of releasing gripping of the gripper may include stopping pressing on the upper surface of the stack by the gripper; and spacing the gripper from the stack.

In addition, the step of moving the stack between the pair of pressing blocks including press heaters in the heating and pressing step may include not only a case where only the stack itself is moved but also a case where the stack, being placed on the stack table, is moved together with the stack table. In this case, a subject to be heated and pressed by the pair of pressing blocks and the press heaters may refer to the stack and the stack table.

In an exemplary embodiment of the present invention, in the heating and pressing step, the stack may be heated and pressed for 5 seconds to 60 seconds under a temperature condition of 50°C to 90°C and a pressure condition of 0.5 Mpa to 6.0 Mpa. More preferably, the stack may be heated and pressed for 5 seconds to 30 seconds under a temperature condition of 65°C to 90°C and a pressure condition of 1.0 Mpa to 6.0 Mpa. More preferably, the stack may be heated and pressed for 7 seconds to 25 seconds under a temperature condition of 65°C to 85°C and a pressure condition of 3 Mpa to 5.5 Mpa.

When heating and pressing are performed while satisfying the above conditions, the adhesive forces between the first electrode and the separator and between the separator and the second electrode can be improved without damaging the first electrode, the separator, and the second electrode. As a result, the performance of the electrode assembly can be improved.

In an exemplary embodiment of the present invention, the heating and pressing step is not performed while the induction heating step is performed.

In an exemplary embodiment of the present invention, the induction heating step may include measuring a temperature distribution on a surface of the stack during the induction heating; adjusting an induction heating temperature for the stack according to the measured temperature distribution; and inductively heating the stack based on the set induction heating temperature. That is, by adjusting the induction heating temperature of the stack according to the measured temperature distribution of the upper surface of the stack, it is possible to inductively heat the electrode in an efficient manner without using unnecessary energy.

In an exemplary embodiment of the present invention, the electrode tab heating step may be performed between the induction heating step and the heating and pressing step. That is, the electrode tab heating step is carried out after the induction heating step. This is because even if the induction heating step is performed, additional heating is required due to the rapid temperature change of the electrode tab portion. Because this additional step aims at heating the stack including the electrode tabs such that it can be heated to a uniform temperature in the heating and pressing step, the electrode tab heating step is to be performed before the heating and pressing step.

That is, the method for manufacturing an electrode assembly according to an exemplary embodiment of the present invention may sequentially proceed with the induction heating step; the electrode tab heating step; and the heating and pressing step. In addition, the method may further proceed with the standby step between the induction heating step and the electrode tab heating step.

### <Electrode Assembly Manufacturing Apparatus>

An exemplary embodiment of the present invention provides an apparatus for manufacturing an electrode assembly (electrode assembly manufacturing apparatus) including a first electrode, a separator and a second electrode.

For reference, a semi-finished product state in which the first electrode, the separator, and the second electrode are repeatedly stacked is referred to as a stack, and a separator winding process is performed on the semi-finished product so that one distinct component can be classified as an electrode assembly. In addition, at least one of the first electrodes of the stack may include a first electrode tab, and at least one of the second electrodes of the stack may include a second electrode tab.

As a result, the finally manufactured electrode assembly may also include at least one first electrode tab and at least one second electrode tab.

The electrode assembly manufacturing apparatus includes an induction heating unit, and an electrode tab heating unit. The induction heating unit of the electrode assembly manufacturing apparatus of the present invention performs the above-described induction heating step, and the electrode tab heating unit performs the above-described electrode tab heating step. Preferably, the electrode tab heating unit may be configured to perform induction heating on the electrode tab. That is, when the electrode assembly manufacturing apparatus according to the present invention is used, the stack including the first electrode, the separator, and the second electrode is uniformly heated in the process of performing the heating and pressing step by the heating and pressing unit, so that uniform adhesive force can be secured between the respective layers in the stack. Through this, the air permeability deviation of the separator, the separator thickness change deviation and the adhesive force deviation according to the stacked position of the electrode assembly are reduced, so that an electrode assembly with uniform performance can be manufactured while reducing a volume of the electrode assembly. In addition, an electrode assembly with an increased energy density per unit volume can be manufactured.

The electrode assembly manufacturing apparatus according to the present invention may further include a separator supply unit configured to supply the separator to the stack table; a first electrode supply unit configured to supply the first electrode to the stack table; and a second electrode supply unit configured to supply the second electrode to the stack table.

In an exemplary embodiment of the present invention, the induction heating unit may be a gripper that grips the stack in order to convey the stack to the heating and pressing unit. The gripper may include an induction heating coil. As described above, the induction heating coil may be built in the gripper or may be installed outside the gripper. When the gripper serves as an induction heating unit, a process space for installing the induction heating unit can be saved. In addition, a process time can also be shortened because induction heating can be performed while conveying the stack. The gripper may perform a function of gripping the stack while conveying the stack from the stack table to the heating and pressing unit.

In an exemplary embodiment of the present invention, the induction heating unit may be installed separately from the gripper for conveying the stack. That is, the induction heating unit may include a first induction heating device including an induction heating coil; and a first device moving unit configured to move the first induction heating device to a surface of the stack. When the first device moving unit moves the first induction heating device to an appropriate distance from the stack, the first induction heating device may inductively heat the stack. When the induction heating on the stack is completed, the first device moving unit may separate the first induction heating device from the stack. In this case, as described above, there is an advantage in that it is easy to apply even if the stack has a high thickness, and there is an advantage in that it can be used even when inductively heating the electrode tab.

In an exemplary embodiment of the present invention, the induction heating unit may be provided separately from the gripper for conveying the stack, so that the stack may be inductively heated after being moved to the induction heating unit. Preferably, the induction heating unit may perform induction heating on the stack while it is being maintained in the state gripped by the gripper. That is to say, the gripper, having transferred the stack from the stack table to the induction heating unit, does not release the gripping while the induction heating is performed. When the induction heating is completed, the stack may be transferred to the heating and pressing unit by the gripper, so as to be heated and pressed by the heating and pressing unit. By doing so, unnecessarily repetitive gripping and releasing of the stack can be avoided.

In the present disclosure, "unit" means an interface that performs a specific function within the electrode assembly manufacturing apparatus.

The induction heating coil of the electrode assembly manufacturing apparatus according to an exemplary embodiment of the present invention may be in contact with the stack or spaced from the stack by a predetermined distance. In this case, the predetermined distance may be 15 mm or less, more specifically, greater than 0 mm and equal to or less than 15 mm, preferably equal to or greater than 0.05 mm and equal to or less than 10 mm, and more preferably equal to or greater than 0.3 mm and equal to or less than 5 mm.

The advantages that are achieved when the induction heating coil is in contact with the stack and when the induction heating coil is spaced from the stack by a predetermined distance are as described in the method for manufacturing an electrode assembly.

In an exemplary embodiment of the present invention, the induction heating unit may include an induction heating coil and an induction heating plate.

In addition, the induction heating coil may be included inside an induction heating plate including a non-conductive material. The induction heating plate may include an alternating current generator for providing alternating current to the induction heating coil and may serve to protect the induction heating coil. The use of a non-conductive material as a material of the induction heating plate is to prevent an induced current by the induction heating coil from being generated also in the induction heating plate.

The induction heating plate may be a mold made of a non-conductive material. The non-conductive material may be epoxy, but is not limited thereto.

In addition, the induction heating coil and the induction heating plate may constitute one set.

The induction heating unit may include an alternating current generator, but is not limited thereto, and any means capable of generating an electromagnetic induction for the induction heating coil may be applied.

The electrode assembly manufacturing apparatus according to an exemplary embodiment of the present invention may further include a first control unit configured to measure a temperature distribution on a surface of the stack, to adjust an induction heating temperature for the stack according to the measured temperature distribution, and to determine whether to stop induction heating for the stack based on the induction heating temperature and an induction heating time for the stack.

In addition, the first control unit may also be configured to adjust an induction heating time for the stack.

That is, a condition for performing the induction heating step and a condition for performing the standby step can be set by the first control unit. For each condition, the contents described in the method for manufacturing an electrode assembly may be applied.

In an exemplary embodiment of the present invention, the electrode tab heating unit, implemented as an induction heater, may include a second induction heating device including an induction heating coil; and a second device moving unit configured to move the second induction heating device to the first electrode tab or second electrode tab. When the second device moving unit moves the second induction heating device to an appropriate distance from the electrode tab, the second induction heating device may inductively heat the electrode tab. When the induction heating on the electrode tab is completed, the second device moving unit may separate the second induction heating device from the electrode tab. This process may be performed through the second control unit that performs a function of controlling an operation of the electrode tab induction heating unit according to the condition of the above-described electrode tab (induction) heating step.

In an exemplary embodiment of the present invention, the induction heating coil may be in contact with or spaced from at least one of the first electrode tab and the second electrode tab by a predetermined distance. In this case, the predetermined distance may be 15 mm or less, more specifically, greater than 0 mm and equal to or less than 15 mm, preferably equal to or greater than 0.05 mm and equal to or less than 10 mm, and more preferably equal to or greater than 0.3 mm and equal to or less than 5 mm.

The advantages that are achieved when the induction heating coil is in contact with the electrode tab and when the induction heating coil is spaced from the electrode tab by a predetermined distance are as described in the method for manufacturing an electrode assembly.

In an exemplary embodiment of the present invention, the electrode tab induction heating unit may include an induction heating coil and an induction heating plate. The description of the induction heating coil and the induction heating plate of the induction heating unit may be likewise applied to the description of the induction heating coil and the induction heating plate of the electrode tab induction heating unit with necessary modifications, such as some differences in the shapes and sizes due to the size difference and location of the heating target.

In an exemplary embodiment of the present invention, the heating and pressing unit may include a pair of pressing blocks, and may be configured to surface-press the stack while moving the pair of pressing blocks towards each other.

The heating and pressing unit includes a pair of pressing blocks and a press heater for heating the pressing blocks. While the press heater heats the pressing blocks, the pair of pressing blocks move towards each other, so that the stack placed between the pressing blocks can be surface-pressed.

In this case, the pair of pressing blocks may include press heaters therein.

In another exemplary embodiment of the present invention, the heating and pressing unit may include two separate heating and pressing units to be divided. That is, the heating and pressing unit may include a first heating and pressing unit and a second heating and pressing unit.

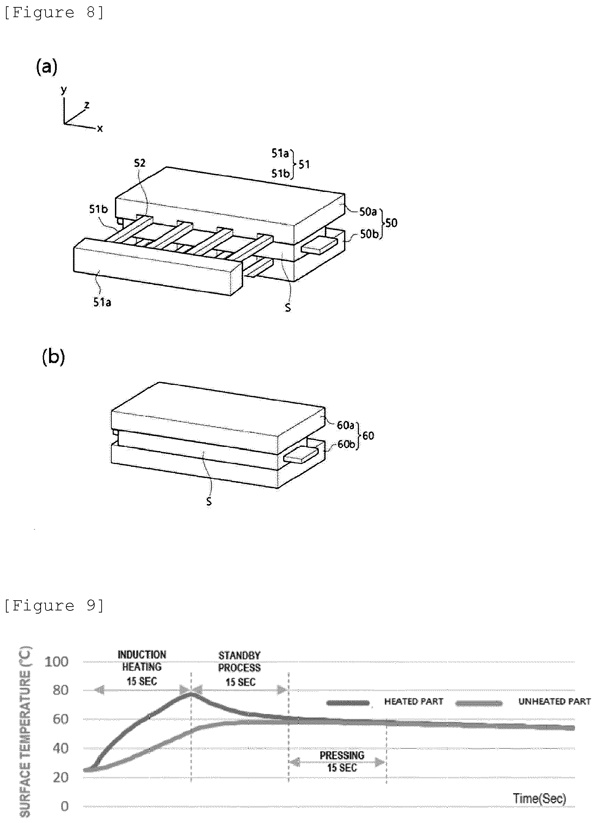

Referring to FIG. 8, the first heating and pressing unit may include a pair of first pressing blocks. Pressing surfaces of the pair of first pressing blocks may include grooves corresponding to the gripper so as to press the stack while the gripper grips the stack. The pressing surfaces other than the grooves may be planes. The second heating and pressing unit may include a pair of second pressing blocks. Pressing surfaces of the pair of second pressing blocks may be provided as planes. That is, when the stack is placed on the press surfaces of the pressing blocks, the second pressing blocks may move mutually to heat and press the stack.

When the heating and pressing unit includes two separate units as described above, it is possible to prevent loss of adhesive force between respective layers inside the stack due to cooling while the heated stack is conveyed.

Conditions for heating and pressing the stack by the heating and pressing unit are the same as those of the heating and pressing step described above.

In accordance with the electrode assembly manufacturing apparatus according to an exemplary embodiment of the present invention, the induction heating unit, the electrode tab heating unit, and the heating and pressing unit may be configured to be sequentially operated. That is, as described above, the apparatus may operate such that the electrode tab heating step can be performed between the induction heating step and the heating and pressing step.

Meanwhile, in an exemplary embodiment of the present invention, the electrode assembly may have a rated capacity of 50Ah to 200Ah, preferably 50Ah to 150Ah, and more preferably 60Ah to 140Ah.

The electrode assembly may have a rate of a full length to a full width of 5 to 10, preferably 5 to 8. Specifically, the electrode assembly may have a full length of 400 mm to 600 mm, a full width of 50 mm to 150 mm, preferably a full length of 500 mm to 600 mm, and a full width of 50 mm to 100 mm.

An exemplary embodiment of the present invention may include a first pressing unit including induction heating and a second pressing unit for heating and pressing the inductively heated electrode assembly, wherein both are to be operated on an electrode assembly that has been completed by having the stack assembled on the stack table. In particular, in the case of a large-sized electrode assembly being heated by a direct contact method, a severe temperature deviation may occur depending on a position inside the electrode assembly, particularly between the outermost of the electrode assembly and the central portion of the electrode assembly. However, when the exemplary embodiment of the present invention is applied to a large-sized electrode assembly, it can show an advantage in uniformly heating the entire electrode assembly, regardless the position within the electrode assembly, even if the thickness of the electrode assembly is large.

In an exemplary embodiment of the present invention, the stack table may include a table body on which the stack is to be placed and a drive unit configured to drive the table body. The table body may include a stack table heater capable of heating the stack to a predetermined temperature when the stack is placed.

In an exemplary embodiment of the present invention, the first electrode supply unit may include at least one of a first electrode seating table, a first electrode roll, a first cutter, a first conveyor belt, and a first electrode supply head.

In addition, the first electrode seating table may include a first electrode heater for heating the first electrode placed on the first electrode seating table to a predetermined temperature.

In an exemplary embodiment of the present invention, the second electrode supply unit may include at least one of a second electrode seating table, a second electrode roll, a second cutter, a second conveyor belt, and a second electrode supply head.

In addition, the second electrode seating table may include a second electrode heater for heating the second electrode placed on the second electrode seating table to a predetermined temperature.

In an exemplary embodiment of the present invention, a first electrode stacking unit may include a first suction head that vacuum-sucks the first electrode seated on the first electrode seating table. The first electrode may be moved from the first electrode seating table to the stack table through the first electrode stacking unit.

A second electrode stacking unit may include a second suction head that vacuum-sucks the second electrode seated on the second electrode seating table. The second electrode may be moved from the second electrode seating table to the stack table through the second electrode stacking unit.

In an exemplary embodiment of the present invention, the first electrode may be a positive electrode, and the second electrode may be a negative electrode.

In an exemplary embodiment of the present invention, the first electrode may be a negative electrode, and the second electrode may be a positive electrode.

In an exemplary embodiment of the present invention, for current collectors used for a positive electrode and a negative electrode, an active material, a conductive material and the like, active materials known in the art can be used without limitation, and also for methods for manufacturing the positive electrode and the negative electrode, methods known in the related art can be used without limitation.

In an exemplary embodiment of the present invention, as for the separator, active materials known in the art can be used without limitation, and also as for a method for manufacturing a separator, methods known in the related art can be used without limitation. However, in an exemplary embodiment of the present invention, the separator may include a porous polymer substrate and an organic/inorganic composite porous coating layer formed on at least one surface of the polymer substrate, and the organic/inorganic composite porous coating layer may include particulate binder resins and inorganic particles.

In an exemplary embodiment of the present invention, the particulate binder resin may include at least one selected from the group consisting of a fluorine-based polymer, an acrylic polymer particle, and a hybrid polymer particle of an acrylic polymer particle and an acrylic polymer.

In an exemplary embodiment of the present invention, the fluorine-based polymer may be a homopolymer of vinylidene fluoride, a copolymer of vinylidene fluoride and another polymerizable monomer, or a mixture of two or more thereof.

In an exemplary embodiment of the present invention, the inorganic particle may be $Al_2O_3$, but is not limited thereto.

Since the organic/inorganic composite porous coating layer is included, an electrode assembly having increased adhesive force between the electrode and the separator can be manufactured by applying the induction heating step and the heating and pressing step described in the electrode assembly manufacturing method and/or the electrode assembly manufacturing apparatus.

Hereinafter, an electrode assembly manufacturing apparatus and an electrode assembly manufacturing method according to an exemplary embodiment of the present invention will be described in more detail. The following description assumes that the electrode assembly of the present invention is zigzag stacked.

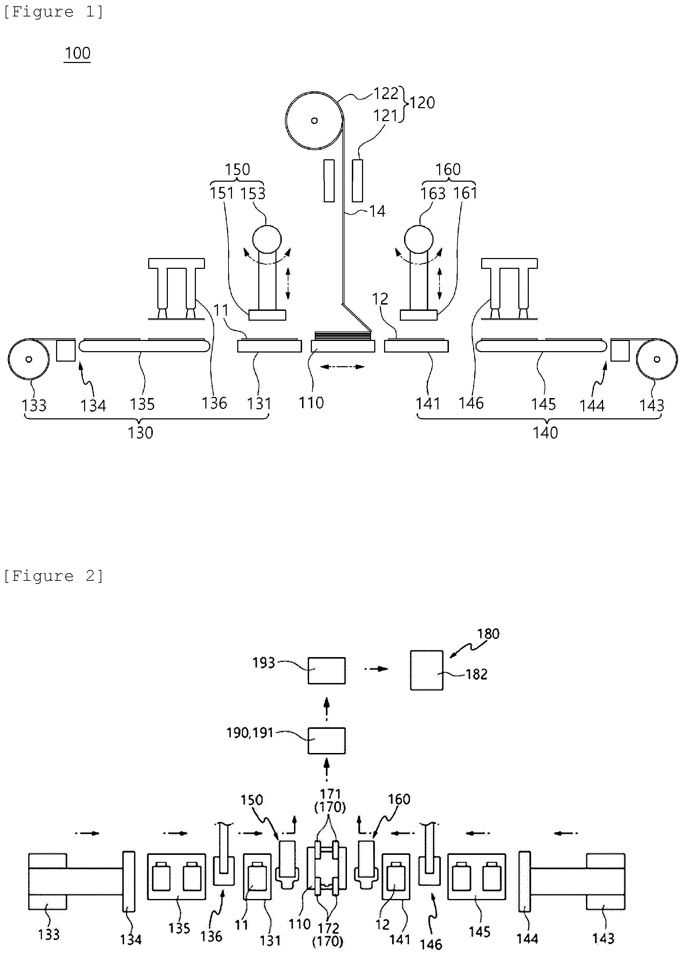

FIG. 1 is a cross-sectional view showing a process flow of an electrode assembly manufacturing apparatus according to an exemplary embodiment of the present invention, and FIG. 2 is a plan view showing the process flow of the electrode assembly manufacturing apparatus according to the exemplary embodiment of the present invention. Here, for convenience, in FIG. 1, a holding mechanism 170, a heating and pressing unit 180, and an induction heating unit 190 shown in FIG. 2 are omitted, and in FIG. 2, a separator supply unit 120 shown in FIG. 1 is omitted.

Referring to FIGS. 1 to 3, an electrode assembly manufacturing apparatus 100 according to an exemplary embodiment of the present invention includes a separator supply unit 120 that supplies a separator 14 to a stack table 110, a first electrode supply unit 130 that supplies a first electrode 11 to the stack table 110, and a second electrode supply unit 140 that supplies a second electrode 12 to the stack table 110. The separator 14, the first electrode 11, and the second electrode 12 may be each supplied to the stack table 110 while being heated in the first electrode supply unit 130 and the second electrode supply unit 140.

In addition, the electrode assembly manufacturing apparatus 100 according to an exemplary embodiment of the present invention includes a first electrode stacking unit 150 that stacks the first electrode 11 supplied by the first electrode supply unit 130 on the stack table 110, and a second electrode stacking unit 160 that stacks the second electrode 12 supplied by the second electrode supply unit 140 on the stack table 110. In this case, the separator 14 supplied by the separator supply unit 120 is stacked in a zigzag form while alternately reciprocating from the left side to the right side of a stacking axis, and vice versa. In this case, the first electrode 11 and the second electrode 12 are alternately inserted into spaces created by folding the separator 14, and as a result, a stack is provided on the stack table 110, the stack having therein the first electrode 11, the separator 14, the second electrode 12, and the separator 14 repeatedly stacked.

The separator supply unit 120 may include a separator heating unit 121 and a separator roll 122. The separator heating unit 121 is selectively applicable.

More specifically, the first electrode supply unit 130 may include a first electrode seating table 131, a first electrode heater 132, a first electrode roll 133, a first cutter 134, a first conveyor belt 135, and a first electrode supply head 136. The first electrode heater 132 is selectively applicable.

In addition, the second electrode supply unit 140 may include a second electrode seating table 141, a second electrode heater 142, a second electrode roll 143, a second cutter 144, a second conveyor belt 145, and a second electrode supply head 146. The second electrode heater 142 is selectively applicable.

The first electrode stacking unit 150 stacks the first electrode 11 on the stack table 110. In this case, the first electrode stacking unit 150 may include a first suction head 151, a first head heater (not shown), and a first moving unit 153. In addition, the second electrode stacking unit 160 stacks the second electrode 12 on the stack table 110. The second electrode stacking unit 160 may include a second suction head 161, a second head heater (not shown), and a second moving unit 163.

The first electrode stacking unit 150 and the second electrode stacking unit 160 may further include heaters (not shown) for preheating the first electrode and the second electrode according to circumstances.

In addition, the electrode assembly manufacturing apparatus 100 according to an exemplary embodiment of the present invention may further include a holding mechanism 170 for securing the first electrode 11 and the second electrode 12 in place when they are stacked on the stack table 110. Further, the electrode assembly manufacturing apparatus 100 according to an exemplary embodiment of the present invention includes a heating and pressing unit 180 that heats and presses the stack placed on the stack table 110, so as to bond the first electrode 11, the separator 14, and the second electrode 12 to one another.

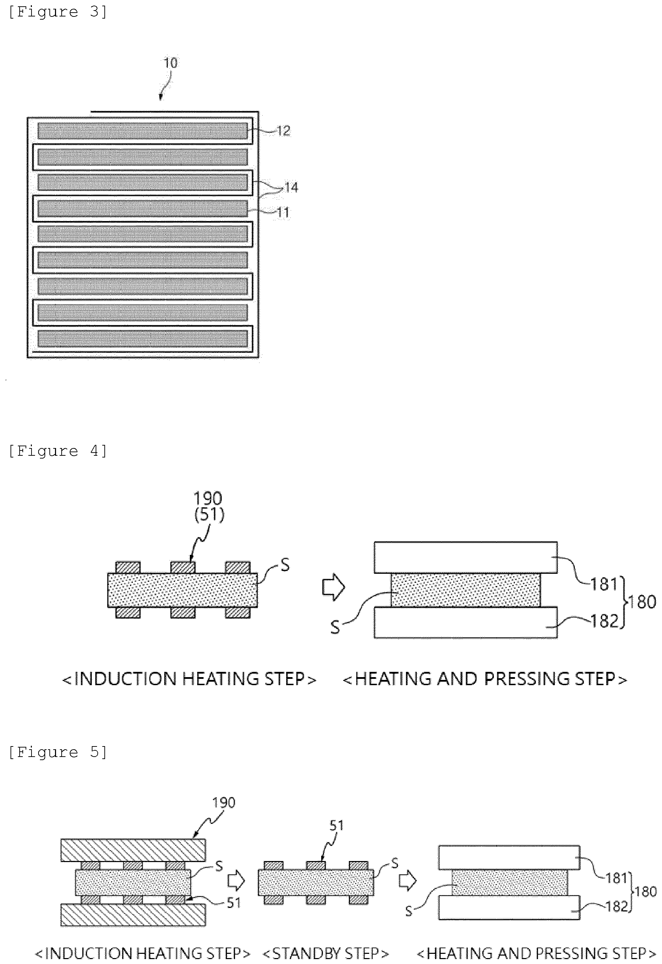

In addition, the electrode assembly manufacturing apparatus 100 according to an exemplary embodiment of the present invention further includes an induction heating unit 190 that inductively heats the stack and allows the heat to transfer throughout the electrodes in the stack. In addition, a control unit (not shown) for controlling, for example, whether or not to actuate the induction heating unit 190 may be further included. Through this, it is possible to finally manufacture an electrode assembly 10 as shown in FIG. 3.

FIG. 3 is a cross-sectional view illustratively showing an electrode assembly manufactured through an electrode assembly manufacturing apparatus and an electrode assembly manufacturing method according to an exemplary embodiment of the present invention.

Referring to FIG. 3, the electrode assembly 10 may have a stacked form including a separator folded and stacked in a zigzag form, and first electrodes or second electrodes alternately inserted into spaces between folds of the separator.

In this case, the electrode assembly 10 may be provided in such a form that the separator 14 surrounds the stack from the outside. However, it should be noted that the configuration of the electrode assembly 10 is not limited to the example of FIG. 3.

FIGS. 4 and 5 are views schematically showing an operation process of the induction heating unit according to an exemplary embodiment of the present invention.

Specifically, FIG. 4 shows a case where the induction heating unit 190 is a gripper 51. The gripper 510 may include an induction heating coil (not shown). The gripper 51 may perform induction heating on the stack S while gripping the stack S. While performing induction heating by the gripper 51, the stack S may be conveyed to the heating and pressing unit 180. In the heating and pressing unit 180, the stack S may be heated and pressed. In this case, before heating and pressing the stack S in the heating and pressing unit 180, a standby process (step) may be performed, which allows the stack to stand by for a certain predetermined period of time after stopping induction heating. In this case, a condition of the standby process may be set by a control unit (not shown).

FIG. 5 shows another exemplary embodiment of the induction heating, illustrating that the stack S is inductively heated using the induction heating unit 190 provided separately from the gripper 51. In this case, the stack S is inductively heated after being moved to the induction heating unit. Preferably, the induction heating unit 190 may perform induction heating on the stack S while it is being maintained in the state gripped by the gripper 51. That is to say, the gripper 51, having transferred the stack S from the stack table 110 to the induction heating unit 190, does not release the gripping while the induction heating is performed. When the induction heating is completed, the stack S may be transferred to the heating and pressing unit 180 by the gripper 51, so as to be heated and pressed by the heating and pressing unit 180. By doing so, unnecessarily repetitive gripping and releasing of the stack S can be avoided. When the induction heating is completed, the stack S may be heated and pressed in the heating and pressing unit 180 as in FIG. 4. In this case, before heating and pressing the stack S in the heating and pressing unit 180, a standby process (step) may be performed, which allows the stack S to stand by for a certain predetermined period of time after stopping induction heating. Even in this case, a condition of the standby process may be controlled by the control unit (not shown). As shown in FIG. 5, the standby process may be performed in a state in which the stack S gets out of the induction heating unit 190 and is gripped by the gripper 51.

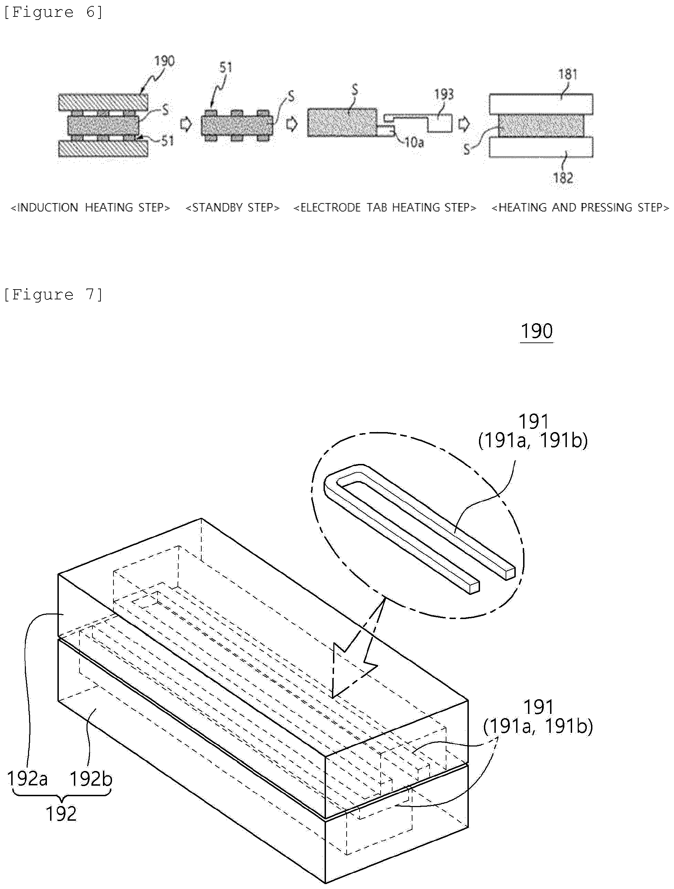

FIG. 7 illustratively shows an induction heating unit according to an exemplary embodiment of the present invention. Referring to FIG. 7, the induction heating unit 190 may include an induction heating coil 191 and an induction heating plate 192. More specifically, induction heating coils 191a and 191b may be built in induction heating plates 192a and 192b. The induction heating coil 191 may have a U-shape. The induction heating coils 191a and 191b may face each other. The specific arrangement of the induction heating coil 191 may be as shown in FIG. 7, but is not limited thereto.

When alternating current is applied to the induction heating coil 191, induced current can be generated in the metallic electrodes in the electrode assembly, so the electrodes are heated by the induced current. Therefore, the induction heating can be performed, targeting an electrode arranged in a specific layer within the electrode assembly.

In the present invention, the induction heating is performed in advance before the heating and pressing step, targeting electrodes arranged at the central portion of the electrode assembly, which are typically not effectively heated in the heating and pressing step of heating and pressing the electrode assembly.

FIG. 6 is a diagram schematically illustrating an operation process of an electrode tab heating unit according to an exemplary embodiment of the present invention. FIG. 6 shows, as an exemplary embodiment, that the stack S is inductively heated using the induction heating unit 190 provided separately from the gripper 51. As described in FIG. 5, the induction heating step, the standby step, and the heating and pressing step may be performed on the stack S. In this case, the first electrode tab 10a may be inductively heated by the electrode tab induction heating unit 193 between the standby step and the heating and pressing step. Through this, the temperature of the electrode tab portion, which has been relatively quickly lowered in temperature, can be raised, and the stack S can be pressed at a uniform temperature in the heating and pressing step. In this case, the first electrode tab may be included in plural in the stack. In addition, the stack S may include a second electrode tab (not shown), and induction heating on the second electrode tab may be applied in the same way as induction heating on the first electrode tab. The second electrode tab may also be included in plural in the stack. The conditions described above may be applied to the conditions of each step.

FIG. 8 shows a configuration of the heating and pressing unit 50, and particularly shows the embodiment, according to which the heating and pressing unit 50 includes a first heating and pressing unit 50 and a second heating and pressing unit 60.

FIG. 8(a) is a perspective view showing the first heating and pressing unit 50, and FIG. 8(b) is a perspective view showing the second heating and pressing unit 60.

Referring to FIG. 8(a), the first heating and pressing unit 50 may heat and press the stack S in a state where the stack S is fixed by the gripper 51. The first heating and pressing unit 50 may include a pair of first pressing blocks 50a and 50b. In the pair of first pressing blocks 50a and 50b, pressing surfaces for pressing are all planes except for groove(s) for receiving fixing part(s) 51b of the gripper 51.

The gripper 51 may include a main body 51a, which may preferably have a length (x) and height (y) corresponding to or greater than the stack S, and a fixing part 51b that protrudes from the main body 51a, being configured to hold the stack S. Here, the length (x) of the stack S means the longest dimension from one end to the other end of the stack S, the height (y) means a dimension of the stack S in the stacking direction, and the width (z) may mean a horizontal extension of the stack S in a direction perpendicular to the length (x) and height (y).

The fixing part 51b can be adjusted in its position along the height direction of the main body 51a, so that the fixing part 51b can contact upper and lower surfaces of the stack S, to thereby fix the stack S.

Thereafter, the pair of first pressing blocks 50a and 50b move towards each other to heat and press the stack S. The electrodes and separator inside the electrode assembly are stably bonded through the heating and pressing.

The first heating and pressing unit 50 may be a component that supplements cooling while the inductively heated electrode assembly moves, and may be selectively provided. That is, the first heating and pressing unit may be omitted in some cases.

Referring to FIG. 8(b), the second heating and pressing unit 60 may finally heat and press the stack S that has been primarily heated and pressed by the first heating and pressing unit 50. The second heating and pressing unit 60 includes a pair of second pressing blocks 60a and 60b, and the pair of pressing blocks 61 and 62 may be moved towards each other to surface-press the stack S. In addition, in case of the pair of second pressing blocks 60a and 60b included in the second heating and pressing unit 60, pressing surfaces thereof for contacting and pressing the stack S may be all provided as planes.

The description of the electrode assembly manufacturing method according to the present invention may also be applied to the electrode assembly manufacturing apparatus according to the present invention, and vice versa.

<Electrode Assembly>

In the present disclosure, the "outermost of the electrode assembly" means the uppermost position or the lowermost position in the stacking direction of the stack.

In addition, in the present disclosure, the "center (or middle) of the electrode assembly" means a position located at the center (or middle) part of the electrode assembly between the uppermost part and the lowermost part along the stacking axis, or in other words, in the stacking direction of the stack.

An exemplary embodiment of the present invention provides an electrode assembly including a first electrode, a separator, and a second electrode manufactured according to the electrode assembly manufacturing method and/or by using the electrode assembly manufacturing apparatus according to the present invention. That is, the electrode assembly may be an electrode assembly prepared by a zigzag stacking method.

However, the electrode assembly may also have a laminating and folding (S&F) structure in which electrodes and a separator are wound, or a stacking and laminating (S&L) structure in which electrodes and a separator are sequentially stacked. That is, in view of the nature of the present invention that applies a heating process and a pressing process to the electrode assembly in order to improve the adhesive force between the electrodes and the separator within the electrode assembly, the present invention is applicable to electrode assemblies prepared by various methods.

In an exemplary embodiment of the present invention, since the electrode assembly is compressed while being heated, the energy density per unit volume may be increased. That is, since the electrode assembly is heated and pressed, the volume of the electrode assembly is reduced, as compared with a case where the electrodes and the separator are simply stacked and then packaged.

In particular, the volume reduction of the electrode assembly may be realized through the separator. In the present invention, the configuration that the separator is compressed after zigzag stacking means that the separator of the electrode assembly is compressed, as compared with the separator before compression.

That is, in an exemplary embodiment of the present invention, a compression rate of the separator located at the outermost of the electrode assembly is greater than a compression rate of the separator located at the center of the electrode assembly. The difference in compression rate may be approximately 3%p (percentage point), preferably 2%p, and more preferably 1.5%p.

In an exemplary embodiment of the present invention, the compression rate of the separator located at the outermost of the electrode assembly may be 3% to 8%, preferably 4% to 8%.

In an exemplary embodiment of the present invention, the compression rate of the separator located at the center of the electrode assembly may be 3% to 8%, preferably 4% to 8%.

In an exemplary embodiment of the present invention, the compression rate of the separator located at the outermost of the electrode assembly may be 3% to 8%, preferably 4% to 8%, and the compression rate of the separator located at the center of the electrode assembly may be 3% to 8%, preferably 4% to 8%.

The compression rate of the separator may be calculated by a difference between a thickness of the separator supplied to the electrode assembly process (fabric thickness, before the assembly process) and a thickness of the separator after completion of the electrode assembly (after the assembly process, including the heating and pressing).

In an exemplary embodiment of the present invention, the thickness of the separator located at the center of the electrode assembly may be 1 to 1.09 times, preferably greater than 1 time and equal to or less than 1.09 times, more preferably greater than 1 time and equal to or less than 1.05 times, and most preferably greater than 1 time and equal to or less than 1.03 times the thickness of the separator located at the outermost of the electrode assembly.

That is, in the electrode assembly in accordance with an exemplary embodiment of the present invention, the thickness of the separator located at the outermost of the electrode assembly may be less than the thickness of the separator located at the center of the electrode assembly, and the thickness of the separator located at the center of the electrode assembly may be equal to or less than 1.09 times the thickness of the separator located at the outermost of the electrode assembly.

In an exemplary embodiment of the present invention, a thickness deviation of the separator of the electrode assembly may be 9% or less, preferably 5% or less, and more preferably 3% or less.

The electrode assembly according to the present invention is manufactured by heating and pressing a stack (unfinished electrode assembly) in which electrodes and a separator are stacked. Here, since the thickness deviation between the outermost separator of the electrode assembly and the separator at the center is the largest, it is possible to check whether the thickness deviation of the separator of the electrode assembly is within the numerical range by comparing the thicknesses of the outermost separator of the electrode assembly and that of the centrally positioned separator.

An exemplary embodiment of the present invention provides an electrode assembly including a first electrode, a separator, and a second electrode. The electrode assembly is stacked in a zigzag form and heated and pressed to provide an electrode assembly that satisfies Equation 1 below.

$$[\text{Equation 1}]$$

$$1.02E_A \leq E_B$$

in Equation 1,

$E_A$ is the energy density (Wh/L) of the electrode assembly before heating and pressing, and
$E_B$ is the energy density (Wh/L) of the electrode assembly after heating and pressing.

In an exemplary embodiment of the present invention, the electrode assembly may satisfy Equation 1 below. Specifically, Equation 1 may be $1.02E_A \leq E_B$, preferably $1.03E_A \leq E_B$. That is, the energy density (Wh/L) increases as the separator and the electrodes are compressed during the heating and pressing. In this case, the energy density means power per volume.

The energy density is a value obtained by disassembling the electrode assembly, acquiring energy densities at the outermost and central positions of the electrode assembly, and then averaging those acquired values.

As such, the electrode assembly according to an exemplary embodiment of the present application has uniform performance and better withstand voltage because the thickness of the separator is uniform.

In an exemplary embodiment of the present invention, the compression rate of the separator located at the outermost of the electrode assembly may be greater than the compression rate of the separator located at the center of the electrode assembly.

That is, the electrode assembly according to the present invention has uniform performance and better withstand voltage because the thickness of the separator is uniform.

In an exemplary embodiment of the present invention, the withstand voltage of the electrode assembly may be 1.5 kV or higher.

In addition, the description of the electrode assembly manufacturing apparatus and the configuration of the manufacturing apparatus according to the present invention can also be applied, to the relevant extent, to the manufacturing method according to the present invention and the electrode assembly manufactured by the manufacturing method according to the present invention.

In an exemplary embodiment of the present invention, the air permeability of the separator located at the center of the electrode assembly may be 80 sec/100 ml to 120 sec/100 ml, preferably 80 sec/100 ml to 110 sec/100 ml, and more preferably 85 sec/100 ml to 100 sec/100 ml.

In addition, in an exemplary embodiment of the present invention, the air permeability of the separator located at the outermost of the electrode assembly may be 80 sec/100 ml to 120 sec/100 ml, preferably 80 sec/100 ml to 110 sec/100 ml, and more preferably 85 sec/100 ml to 100 sec/100 ml.

According to an exemplary embodiment of the present invention, the deviation between the air permeability of the separator located at the center of the electrode assembly and the air permeability of the separator located at the outermost of the electrode assembly may be 2 sec/100 ml to 15 sec/100 ml, and preferably 2 sec/100 ml to 10 sec/100 ml.

Although the exemplary embodiments of the present invention have been described in detail, it will be obvious to one skilled in the art that the scope of the present invention is not limited thereto and various modifications and variations can be made without departing from the scope of the present invention defined in the claims.

**<Manufacture of Electrode Assembly>**

**1) Example 1**

19 (nineteen) positive electrodes, 20 (twenty) negative electrodes, and a separator were supplied to the stack table from the positive electrode supply unit, the negative electrode supply unit, and the separator supply unit, respectively.

More specifically, the positive electrodes and the negative electrodes were supplied by being cut from a positive electrode sheet and a negative electrode sheet, respectively, and the separator was supplied in the form of a separator sheet. In this case, the positive electrode and the negative electrode were manufactured to have a positive electrode tab and a negative electrode tab, respectively. Thereafter, the supplied separator was folded while rotating the stack table, and the positive electrodes, the negative electrodes and the separator were stacked.

In this case, the positive electrode and the negative electrode were supplied respectively using electrode stacking units including a suction head, an electrode non-contact heater, and a moving unit.

At the same time, the stacking of the positive electrode or negative electrode on the uppermost side of the stack was performed on the stack table using a holding mechanism. As a result, a stack (electrode assembly) was prepared, which includes the positive electrodes, the negative electrodes and the separator stacked in a zigzag form.

Subsequently, the stack was inductively heated for 15 seconds (induction heating process) with an induction heating unit including a U-shaped induction heating coil. Thereafter, the stack was allowed to stand by for 15 seconds (standby process). After the standby process, the electrode tab of the stack was inductively heated for 15 seconds (electrode tab induction heating process) with an electrode tab induction heating unit including a U-shaped induction heating coil. Subsequently, the electrode assembly of Example 1 was manufactured by heating and pressing (heating and pressing process) the stack for 15 seconds under a temperature condition of 70°C and a pressure condition of 3.5 MPa.

During the manufacturing process, the surface temperature change of the stack S was measured. Specifically, a heated part, which was directly heated by the U-shaped induction heating coil, and an unheated part, which was not directly heated by the U-shaped induction heating coil were distinguished from the surface of the stack S, and the temperature change was measured for each part. The result is shown in FIG. 9.

In the process of manufacturing the electrode assembly, the above description of the present invention may be applied.

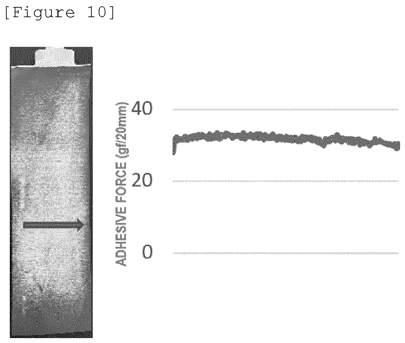

Subsequently, the adhesive force pattern of the electrode assembly of Example 1 was measured using an adhesive force meter, and the result is shown in FIG. 10. Specifically, the adhesive force pattern of the electrode assembly was measured in the direction of the arrow in FIG. 10.

From the result of FIG. 10, it could be confirmed that the surface temperature of the stack can be increased when the induction heating process is performed. In particular, it could be confirmed that temperature non-uniformity among electrodes in the heating and pressing process can be prevented because induction heating can be performed on an electrode that is not located at the outermost of the stack and thus not in direct contact with the induction heating device.

In addition, from the result of FIG. 9, it could be confirmed that the temperature deviation between the heated part and the unheated part can also be reduced when the standby process is performed. It could be confirmed that since the temperature deviation was reduced, the adhesive force pattern of the electrode assembly was uniform as shown in FIG. 10.

Additionally, it was confirmed that the electrode tab was also uniformly bonded by (inductively) heating the electrode tab.

### 2) Comparative Example 1

An electrode assembly of Comparative Example 1 was manufactured in the same manner as in Example 1, except that the induction heating, the electrode tab induction heating and the standby process were not performed in Example 1.

### <Experimental Example 1 - Evaluation of Thickness Change of Separator Fabric and Compression Rate of Separator>

For the electrode assemblies of Example 1 and Comparative Example 1, the thickness change of the separator fabric and the compression rate of the separator were evaluated.

Specifically, the thickness of the separator fabric before stacking was measured. Meanwhile, the electrode assemblies of Example 1 and Comparative Example 1 were disassembled. The separator portion located at the top (outermost) of the electrode assembly and the separator portion at the middle position (central portion) of the electrode assembly were collected, and the thicknesses of the separator fabric were measured. As a result, the thickness change of the separator fabric before and after the electrode assembly process could be obtained, of which results are shown in Table 1 below. In addition, the compression rate of the separator was also calculated from the thickness change of the separator fabric, which is also shown in Table 1 below.

[Table 1]

| | | Separator fabric thickness ($\mu$m) | | Separator compression rate (%) | |
|---|---|---|---|---|---|
| | | central portion | outermos t | central portion | outermos t |
| Example 1 | before process | 9.8 | | 6 | 7 |
| | after process | 9.3 | 9.2 | | |
| Comparative Example 1 | before process | 9.8 | | 0 | 9 |
| | after process | 9.8 | 8.9 | | |

As can be seen in Table 1, it can be confirmed that when the induction heating and the standby process were not performed, the deviation in the separator fabric thickness change was large, and further that the separator fabric thickness at the outermost was excessively reduced and the separator fabric thickness at the central portion showed little change. That is, in Comparative Example 1, unlike Example 1, it could be confirmed that the deviation in the separator thickness was large depending on the position within the electrode assembly.

This means that it is difficult for the electrode assembly to have uniform performance regardless of the location in the electrode assembly. That is, it could be confirmed that the electrode assembly manufactured by the manufacturing apparatus and method according to the present invention shows uniform performance.

**<Experimental Example 2 - Evaluation of Withstand Voltage>**

The withstand voltage was evaluated for the electrode assemblies of Example 1 and Comparative Example 1. The results are shown in Table 2 below.

[Table 2]

|  | Withstand voltage (kV) |
|---|---|
| Example 1 | 1.58 |
| Comparative Example 1 | 1.17 |

As can be seen from Table 2, it could be confirmed that when the induction heating and the standby process are performed, the withstand voltage is better than when the induction heating and the standby process are not performed. That is, it could be confirmed that the withstand voltage performance in Comparative Example 1 was not as good as that of Example 1.

**<Experimental Example 3 - Evaluation of Air Permeability of Separator>**

After disassembling the electrode assemblies of Example 1 and Comparative Example 1, the separator of the electrode assembly at the middle position (or center portion) in the stacking direction was respectively collected. The separators were cut to prepare separator samples with a size of 5 cm X 5 cm (length X width). Thereafter, the separator samples were washed with an organic solvent.
Then, according to the JIS Gurley measurement method of the Japanese industrial standard, a Gurley type Densometer (No. 158) available from Toyoseiki Company was used to measure the air permeability of Example 1 and Comparative Example 1 by measuring the time required for 100 ml (or 100 cc) of air to pass through the separator samples of 1 square inch at room temperature and a pressure condition of 0.05 MPa.
The results are shown in Table 3 below.

[Table 3]

|  | Induction heating (standby process) applied | Air permeability of separator (sec/100 ml) |
|---|---|---|
| Example 1 | O | 97 |
| Comparative Example 1 | X | 98 |

As can be seen in Table 3, it could be confirmed that Example 1 and Comparative Example 1 had similar air permeability.
From the above experimental examples, it could be confirmed that the electrode assembly manufactured by the electrode assembly manufacturing apparatus and method of the present invention is excellent in terms of stability of the electrodes and separator and has an appropriate level of air permeability at which deformation of the separator does not occur.
In addition, it could be confirmed that an electrode assembly having excellent withstand voltage and uniform performance can be manufactured.

**Claims**

1. A method for manufacturing an electrode assembly (10) comprising first electrodes (11), a separator (14), and second electrodes (12), the method comprising:

   a) stacking a stack (S) including the first electrodes (11), the separator (14), and the second electrodes (12) on a stack table (110);

b) performing induction heating by inductively heating the stack (S); and

c) heating and pressing the inductively heated stack (S) by a heating and pressing unit (50, 180),

wherein at least one of the first electrodes (11) includes a first electrode tab (10a),
wherein at least one of the second electrodes (12) includes a second electrode tab, and
wherein the method further comprises:
d) performing electrode tab heating by heating at least one of the first electrode tab (10a) and the second electrode tab.

2. The method of claim 1, wherein step d) is performed after performing step b).

3. The method of claim 1 or 2, wherein step d) is performed by using an induction heating coil.

4. The method of claim 3, wherein in step d) the induction heating coil is in contact with the at least one of the first electrode tab (10a) and the second electrode tab.

5. The method of claim 3, wherein in step d) the induction heating coil is spaced from the at least one of the first electrode tab (10a) and the second electrode tab by a predetermined distance, preferably of 15 mm or less.

6. The method of any one of the preceding claims, wherein step d) is performed for 1 second to 60 seconds.

7. The method of any one of the preceding claims, wherein in step b) the induction heating is performed by gripping the stack (S) by a gripper (51, 510) having an induction heating coil (191, 191a, 191b) and inductively heating while conveying the stack (S) between the stack table (110) and the heating and pressing unit (50, 180).

8. The method of any one of claims 1 to 6, wherein in step b) the induction heating is performed by conveying the stack (S) from the stack table (110) to an induction heating unit (190) including an induction heating coil (191, 191a, 191b) prior to performing step c) and inductively heating the stack (S) in the induction heating unit (190).

9. The method of claim 8, wherein the conveying of the stack (s) from the stack table (110) to an induction heating unit (190) is performed by a gripper (51), and wherein step b) is performed while the gripper (51) maintains gripping the stack(s).

10. The method of any one of the preceding claims, further comprising, between step b) and step c):
e) allowing heat distribution throughout the stack (S) by having the stack (s) stand by in an atmospheric state for a preset period of time.

11. The method of claim 10, wherein step e) is performed for 3 seconds or longer and 60 seconds or shorter, prior to performing step d).

12. An electrode assembly manufacturing apparatus (100) for manufacturing an electrode assembly comprising first electrodes (11), a separator (14), and second electrodes (12), the apparatus comprising:

a stack table (110) configured to allow the first electrodes (11), the separator (14), and the second electrodes (12) to be stacked thereon to form a stack (S); and
a heating and pressing unit (50, 180) configured to heat and press the stack (S),
wherein at least one of the first electrodes (11)includes a first electrode tab (10a),
wherein at least one of the second electrodes (12)includes a second electrode tab, and
wherein the electrode assembly manufacturing apparatus (100) further comprises:

an induction heating unit (190) configured to inductively heat the stack (S), and
an electrode tab heating unit (193) configured to heat at least one of the first electrode tab (10a) and the second electrode tab.

13. The electrode assembly manufacturing apparatus (100) of claim 12, wherein the induction heating unit (190) is a gripper having an induction heating coil (191, 191a, 191b), configured to grip the stack (S) and convey to the heating and pressing unit (50, 180).

**14.** The electrode assembly manufacturing apparatus (100) of claim 12, wherein the induction heating unit (190) comprises:

a first induction heating device including an induction heating coil (191, 191a, 191b); and
a first device moving unit configured to move the first induction heating device to a surface of the stack (S).

**15.** The electrode assembly manufacturing apparatus (100) of claim 12, further comprising a gripper for conveying the stack (s) between the stack table (110) and the induction heating unit (190),
wherein the induction heating unit (190) is configured to heat the stack (s) while the gripper maintains gripping the stack (S).

**16.** The electrode assembly manufacturing apparatus (100) of any one of claims 12 to 15, further comprising a first control unit configured to: measure a temperature distribution on a surface of the stack (S) during induction heating; adjust an induction heating temperature according to the measured temperature distribution; and determine whether to stop induction heating based on the induction heating temperature and an induction heating time.

**17.** The electrode assembly manufacturing apparatus (100) of any one of claims 12 to 16, wherein the electrode tab heating unit (193) comprises:

a second induction heating device including an induction heating coil, and
a second device moving unit configured to move the second induction heating device to the first electrode tab (10a) or the second electrode tab.

**18.** The electrode assembly manufacturing apparatus (100) of claim 17, wherein the induction heating coil of the second induction heating device is configured to be in contact with the at least one of the first electrode tab (10a) and the second electrode tab during the induction heating.

**19.** The electrode assembly manufacturing apparatus (100) of claim 17, wherein the induction heating coil of the second induction heating device is configured to be spaced from the at least one of the first electrode tab (10a) and the second electrode tab by a predetermined distance, preferably of 15 mm or less, during the induction heating.

**20.** An electrode assembly (10) subjected to compression, the electrode assembly comprising a first electrode (11), a separator (14) and a second electrode (12),

wherein the separator (14) is folded multiple times in a zigzag form, the first and the second electrode (11, 12) being alternately stacked with the separator (14) interposed therebetween, and
wherein a compression rate of a part of the separator (14) positioned at the outermost of the electrode assembly (10) is greater than a compression rate of the other part of the separator (14), and a difference in compression rate is 3%p or less.

**21.** The electrode assembly (10) of claim 20, wherein the electrode assembly (10) has a length of 400 mm to 600 mm and a width of 50 mm to 150 mm.

**22.** The electrode assembly (10) of claim 20 or 21,
wherein the separator (14) has an air permeability of 80 sec/100 ml to 120 sec/100 ml at the center of the electrode assembly.

[Figure 1]

<u>100</u>

[Figure 2]

[Figure 3]

[Figure 4]

<INDUCTION HEATING STEP>    <HEATING AND PRESSING STEP>

[Figure 5]

<INDUCTION HEATING STEP>  <STANDBY STEP>    <HEATING AND PRESSING STEP>

[Figure 6]

<INDUCTION HEATING STEP>   <STANDBY STEP>   <ELECTRODE TAB HEATING STEP>   <HEATING AND PRESSING STEP>

[Figure 7]

[Figure 8]

(a)

(b)

[Figure 9]

[Figure 10]

Europäisches
Patentamt

European
Patent Office

Office européen
des brevets

# EUROPEAN SEARCH REPORT

Application Number

EP 23 22 0524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 358 214 A1 (LG ENERGY SOLUTION LTD [KR]) 24 April 2024 (2024-04-24) * paragraph [0051]; claims 1-20; figures 1-15b * | 1-22 | INV. H01M10/04 H01M10/0583 |
| X,P | WO 2023/072942 A2 (VOLKSWAGEN AG [DE]) 4 May 2023 (2023-05-04) * claims 1-5; figures 1-11 * | 1-22 | ADD. B65H45/101 |
| X | US 2021/104719 A1 (OIKAWA MAKIKO [JP]) 8 April 2021 (2021-04-08) * claims 1-15; figures 1-10C * | 1-22 | |
| A | KR 2020 0023853 A (LG CHEMICAL LTD [KR]) 6 March 2020 (2020-03-06) * claims 1-14; figures 1-13 * | 1-22 | |
| A | EP 3 531 488 A1 (LG CHEMICAL LTD [KR]) 28 August 2019 (2019-08-28) * claims 1-14; figures 1A-8B * | 1-22 | |
| A | KR 2017 0122030 A (LG CHEMICAL LTD [KR]) 3 November 2017 (2017-11-03) * claims 1-12; figures 1-6 * | 1-22 | TECHNICAL FIELDS SEARCHED (IPC) H01M B65H |
| A | JP 2014 060141 A (SEKISUI CHEMICAL CO LTD) 3 April 2014 (2014-04-03) * claims 1-6; figures 1-5 * | 1-22 | |

The present search report has been drawn up for all claims

| Place of search | Date of completion of the search | Examiner |
|---|---|---|
| Munich | 3 May 2024 | Catana, Cosmin |

EPO FORM 1503 03.82 (P04C01)

## ANNEX TO THE EUROPEAN SEARCH REPORT
## ON EUROPEAN PATENT APPLICATION NO.

EP 23 22 0524

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2024

| Patent document cited in search report | | Publication date | Patent family member(s) | | Publication date |
|---|---|---|---|---|---|
| EP 4358214 | A1 | 24-04-2024 | CN 117836990 A | | 05-04-2024 |
| | | | EP 4358214 A1 | | 24-04-2024 |
| | | | KR 20230135010 A | | 22-09-2023 |
| | | | WO 2023177220 A1 | | 21-09-2023 |
| WO 2023072942 | A2 | 04-05-2023 | CA 3236464 A1 | | 04-05-2023 |
| | | | DE 102021128348 A1 | | 04-05-2023 |
| | | | WO 2023072942 A2 | | 04-05-2023 |
| US 2021104719 | A1 | 08-04-2021 | CN 112292770 A | | 29-01-2021 |
| | | | JP 7120307 B2 | | 17-08-2022 |
| | | | JP WO2019239988 A1 | | 10-06-2021 |
| | | | US 2021104719 A1 | | 08-04-2021 |
| | | | US 2024097096 A1 | | 21-03-2024 |
| | | | WO 2019239988 A1 | | 19-12-2019 |
| KR 20200023853 | A | 06-03-2020 | KR 20200023853 A | | 06-03-2020 |
| | | | KR 20230135020 A | | 22-09-2023 |
| EP 3531488 | A1 | 28-08-2019 | CN 110050374 A | | 23-07-2019 |
| | | | EP 3531488 A1 | | 28-08-2019 |
| | | | KR 20190054491 A | | 22-05-2019 |
| | | | US 2020235434 A1 | | 23-07-2020 |
| | | | WO 2019093610 A1 | | 16-05-2019 |
| KR 20170122030 | A | 03-11-2017 | NONE | | |
| JP 2014060141 | A | 03-04-2014 | JP 6351930 B2 | | 04-07-2018 |
| | | | JP 2014060141 A | | 03-04-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230000716
- KR 1020230056378

- KR 1020130132230